# EUROPEAN PATENT APPLICATION

(11) **EP 1 227 641 A2**
(43) Date of publication of application: **31.07.2002**
(21) Application number: 01129284.4
(22) Date of filing: 13.12.2001
(51) Int. Cl.: H04L 29/12, H04L 29/06, H04Q 11/04, H04L 12/46

(54) **Proxy signaling using dynamic host configuration protocol (DHCP) request as a trigger for local area network-emulation (LANE) call setup**

(30) Priority: 19.12.2000 US 740072
(71) Applicant: Alcatel USA Sourcing, L.P., Plano, Texas 75075-5813 (US)
(72) Inventor: Mak, Stephen, Broomfield, Colorado 80020 (US)
(74) Representative: Dreiss, Fuhlendorf, Steimle & Becker

(57) **Abstract**

Roughly described, a data connection is established on a connection-oriented communications network for a user device in response to receipt by a controller of a DHCP request from the user device. The user device awaits the DHCP response before sending data packets. The controller withholds the DHCP response until the connection has been established, thereby minimizing loss of data being transmitted by the user device. The controller tears down the connection at the expiry ofthe DHCP lease unless the lease has by that time been renewed.

## Description

### BACKGROUND OF THE INVENTION

### 1. Field of the Invention

The present invention felates in techniques for carrying messages of a protocol over networks of a different protocol. More particularly, the present invention relates to a technique for supporting a connectionless communications protocol, such as Internet protocol (IP) over Ethernet, over a connection-oriented network, such as an asynchronous transfer mode (ATM) network.

### 2. Description of Related Art

Various nodes or network elements (NE's) of a computer data network communicate with each other via commonly agreed upon communications protocols. Each ofthese protocols has different layers or levels, each of which defines a different aspect of the protocol. Each different layer or level can be regarded as a sub-protocol ofthe overall protocol, but also can be regarded as a protocol within itself. All ofthe sub-protocols which together define an overall protocol are often referred to as a "protocol stack." The interfaces between the different layers of a protocol stack are well-defined, such that different alternative sub-protocols can be substituted for other sub-protocols at the same layer in the stack.

An example of a typical protocol used for computer networking is the Internetworking protocol (IP). The IP is a network layer service and includes provisions for addressing, type-of-service specification, fragmentation, reassembly, and security information. It is defined in a series of documents maintained by the Internet Engineering Task Force (IETF), most notably, J. Postel, "Internet Protocol," STD0005 (Sept. 1981) (including RFC0791, RFC0950, RFC0919, RFC0922, RFC0792, RFC1112), incorporated herein by reference.

IP defines a protocol to be used at one particular layer of the overall communications protocol, specifically the "network" protocol layer. Examples of typical alternative network-level protocols include IPX (defined in Novell, Inc., "Advanced Netware, V2.1, Internetwork Packet Exchange Protocol (IPX) with Asynchronous Event Scheduler (AES)", October 1986, incorporated herein by reference); DECnet; and Xerox PUP.

Many modern local area networks (LANs) use an Ethernet protocol as the next layer below the IP layer. The Ethernet includes a media access control (MAC) layer protocol, and is defined in IEEE, "IEEE Standards for Local Area Networks: Carrier Sense Multiple Access with Collision Detection (CSMA/CD) Access Method and Physical Layer Specifications" (IEEE Standard No. 802.3)(1985), incorporated herein by reference. When IP and Ethernet are used together in a protocol stack, the combined protocol stack is sometimes referred to as "IP over Ethernet." Similarly, when IPX, DECnet and Xerox PUP are carried over Ethernet, the combined stacks are sometimes referred to as "IPX over Ethernet," "DECnet over Ethernet" and "PUP over Ethernet," respectively.

The basic unit of data at the network layer is often referred to as a "datagram," such as an "IP datagram," whereas the basic unit of data at the MAC layer is often referred to as a "packet," such as an "Ethernet packet." Datagrams must be encapsulated according to the MAC level protocol in order to be transmitted. In some cases, a datagram may be broken into multiple packets for encapsulation according to the MAC level protocol. Similarly, the recipient node must extract and reassemble the datagram from one or more MAC level packets in order to make use of it. Also, as used herein, a "message" is a logical data unit that is not intended to imply any particular encapsulation. Amessage may be bigger or smaller than a datagram. If a message is bigger than a datagram, then it need be divided into multiple datagrams, which in turn need be divided into multiple packets in order to be transmitted. Other messages consist of a single packet, such as an address resolution protocol (ARP) request packet.

Wide area networks (WANs) typically take advantage of existing communications media for carrying messages over relatively long distances. In a typical configuration, different nodes of a WAN communicate with each other via existing telephony networks such as an integrated services digital network (ISDN) or a broadband ISDN (B-ISDN). In atypical situation, the telephony network is used to connect a subscriber's data network to an Internet Service Provider (ISP), or to connect a subscriber's home office network to his or her central office network. ISDN and B-ISDN networks have their own protocols for transmitting messages, and when two computer networks need to communicate with each other via a telephony communications path, adapters are usually necessary on both ends of the telephony network to convert messages from a computer networking protocol to an ISDN or B-ISDN protocol and vice versa.

Telephony protocols, having been designed historically for voice traffic, are usually connection-oriented protocols. Atypical connection-oriented protocol proceeds first with a set-up phase, in which a calling party specifies the "address", for example, the phone number of a called party, and the network establishes an "connection" between them. All subsequent communication between the two parties then takes place via the established connection, and no further addressing is needed. At the conclusion of the telephone conversation, the connection is released or "torn down," thereby releasing the telephony network resources for other connections. Connection-oriented networks and protocols are highly cost effective in situations in which it is expected that one node will communicate with another node for a fairly lengthy period of time. Such protocols assume that it is less expensive to take the time and the resources for a connection set-up phase than it would cost to examine and to properly forward individually addressed message units which, at least for voice traffic, are all likely to be addressed to the same destination for a lengthy period of time.

Computer data communications protocols, on the other hand, are often connectionless protocols, at least at the lowest levels. In a connectionless protocol, there is no "connection" established between two communicating nodes at these protocol levels as in a connection-oriented protocol. Instead, each message unit contains the address of its destination. Each node that receives a packet examines the destination address ofthe packet in order to determine whether to accept orto ignore the packet. Connectionless protocols, sometimes also called packet-switched protocols, are usually the most cost effective in computer data networks because data traffic in such networks typically consists of numerous messages directed to many different destinations, with a lengthy communication to a single fixed destination taking place only rarely.

Agiven protocol stack can be connection-oriented or connectionless at different levels. It is possible for a protocol stack to be connection-oriented at two non-adjacent layers and connectionless at an intermediate layer, or visa versa. For example, IP over Ethernet and IPX over Ethernet are both connectionless, although at least some ofthe higher protocol levels in the stack might well be connection-oriented.

An example of a commonly used connection-oriented protocol is known as asynchronous transfer mode (ATM), defined in a number of specifications published by the ATM Forum, including: "ATMUser-Network Interface Specification Version 3.1," ATM Forum, Mountain View, California (September 1994) ("UNI 3.1"); "ATMUser-Network Interface (UNI) Signaling Specification Version 4.0," ATM Forum, Mountain View, California (July 1996) ("UNI 4.0"); and International Telecommunication Union, "Broadband Integrated Services Digital Network (B-ISDN) - Digital Subscribers Signaling System No. 2 (DSS2) - User-Network Interface (UNI) Layer 3 Specification for Basic Call/Connection Control," ITU-T Recommendation Q.2931 (February 1995) ("Q.2931"), all incorporated herein by reference.

When two parties wish to communicate over a connection-oriented network such as an ATM network, the network establishes a connection from a first "point of presence" or "endpoint" on the connection-oriented network, through which a first user device, such as a telephone or host computer, reaches the network to a second "point of presence" or "endpoint" on the connection-oriented network through which a second user device can be reached. For data connections, for example, each endpoint on the connection-oriented network has an "adaptor" which interfaces the connection-oriented network protocol, on one hand, with the data protocol, on the other hand. Such an adaptor may be located entirely within a host computer which is itself an endpoint for data communications, in which case the host computer is sometimes referred to as an "endsystem" of the connection-oriented network and the adaptor comprises a level of software in the host computer's protocol stack below the MAC layer.

Alternatively, the adapter may be located within a termination unit of the connection-oriented network, in which the termination unit is connected on one side to the connection-oriented network and on the other side to a computer data network. The ultimate endpoint for the data communication is located in another node on the computer data network. In this alternative, the "adapter" still comprises a layer of software in the protocol stack, but the protocol stack typically extends only as high as the MAC layer or the network layer. If the protocol stack on the termination unit extends only as high as the MAC layer, then the unit is viewed from the data network as a "bridge," also called a bridging network element (BNE). If the protocol stack on the termination unit extends as high as the network layer, then the unit is viewed from the data network as a "router," also called a routing network element.

When an adapter accepts a packet from a computer data network, the adapter needs to be able to determine whether to transmit it on the connection-oriented network over an existing connection or to create a new connection, and if the latter case is true, which connection-oriented network endpoint to target and what parameters should be used in the new connection. More specifically, abridging or routing ATM adapter needs to be able to determine whether the destination MAC or IP address is reachable via an existing ATM virtual circuit or virtual connection (VC) and, if so, which one.

If the destination node is not reachable via existing VCs, the adapter needs to be able to determine whether the destination is reachable at all over the ATM network, and if so, what ATM address, quality of service (QoS), security parameters and other parameters to use in establishing a new VC. These issues are addressed at least partially in several Internet-related documents proposing standards for the transmission of IP datagrams over ATMnetworks. Such documents include the following, all incorporated herein by reference:
M. Laubach, "Classical IP and ARP over ATM," Request for Comments No. 1577 (1994) ("RFC 1577");
M. Perez, "ATM Signaling Support for IP over ATM," Request for Comments No. 1755 (1995) ("RFC 1755");
M. Maher, "ATM Signaling Support for IP over ATM - UNI 4.0 Update," file draft-ietf-ion-sig-uni 4.0-02.txt (March 1997) ("UNI 4.0 Update"); and
Heinanen, "Multiprotocol Encapsulation over ATM Adaptation Layer 5," Request for Comments No. 1483 (1993) ("RFC 1483").

The above documents mostly assume a network architecture having a plurality of ATM endpoints, each of which has an adapter that interfaces the ATM endpoint with an IP or other network layer protocol stack. According to the documents, each ATM adapter maintains amap indicating which IP addresses are reachable via each VC that it has. ATM adaptors are also permitted to maintain a cache of recently confirmed IP-to-ATM address translations, whether or not they are reachable over current VC.

If an IP client (software or hardware) directs an IP packet to an IP destination and the packet is accepted by an originating ATM adapter, then the adapter encapsulates it according to a predefined ATM Adaptation Layer 5 protocol, known as AAL5, and sends it via an existing VC to a destination ATM adapter through which the destination IP address can be reached. If no VC is currently established between these adaptors, then the originating adapter checks its local cache of IP-to-ATM translations for the address of a destination ATM adapter through which the destination IP address can be reached, and if present and valid, "calls" the destination adapter to set up a new switched virtual circuit (SVC) before transmitting the data.

If the desired IP-to-ATM address translation is absent or invalid in the local cache, then the ATM adapter uses an ATM address resolution protocol (ATMARP) to request the translation. According to this protocol, the ATM adapter creates an ATMARP request encapsulated in an ATM cell which contains the desired destination IP address, and sends it to an ATMARP server on the ATM network. The ATM adapter uses a pre-provisioned (or at least pre-identified) point-to-point ATM connection to transmit the ATMARP request. The ATMARP server then examines its own cache of IP-to-ATM address translations, and returns an ATMARP reply message specifying the ATM address through which the destination IP address can be reached. The originating ATM adapter adds the translation to its local cache, "calls" the destination ATM adapter, and proceeds to transmit the data on the newly established SVC.

A problem associated with the conventional techniques described in the above documents is that they are expensive to implement in an ATM adapter. It is desirable that ATM adapters be low cost and relatively simple devices which are not required to perform functions much more than interfacing between the ATM on one side and the data network protocol on the other side. Requiring the ATM adapter to understand also the ATMARP and other similar protocols would likely increase both the cost and the complexity of the unit.

A second problem associated with the above techniques is that the process of transmitting ATMARP requests to an ATMARP server and awaiting a response, as well as the process of establishing a connection across the ATM network once the target ATM address is known, can take a very long time in data transmission terms. During this time, the client device, such as a host computer on the data network, that originated the data packets which instigated the new connection, has no way of knowing that a delay has occurred. The client device thus continues to transmit data packets on the local area network without interruption, typically at a high rate of speed.

If the ATM adapter attempts to buffer the packets while it awaits completion ofthe establishment of SVC, the data storage requirements ofthe ATM adapter can be enormous, especially if the local data network operates at 100 megabits per second or more, for example. Alternatively, the ATM adapter can ignore packets that it cannot buffer, in which case a requirement is imposed on higher level software in the originating host or on a human user to determine that the packets which cannot be buffered are lost and subsequently to retransmit the packets.

A third problem associated with the above techniques arises especially when the ATM network is a telephony ATM network. Such networks have been designed historically to carry primarily voice traffic. Voice calls typically last on the order of three to five minutes, and ATM networks have typically been built with the capacity to handle calls of approximately that duration. The capability of connecting data networks to a telephony ATM network, on the other hand, raises the possibility of many subscribers connecting to Internet Service Providers (ISPs) or private office LANs over the ATM network. These types of connections may last on the order oftwenty to thirty minutes each, which is much longer than an average voice call. Most conventional telephony networks are not designed to handle such lengthy calls on a regular basis without seriously affecting the availability of telephony resources for other subscribers.

Another problem associated with a typical IP-based LAN connection to a remote ISP or a remote LAN via an ATM termination unit-remote (ATU-R) and an ATM network is how to best allocate theATM bandwidth from theATU-R to the ISP or the remote LAN. This ATM bandwidth is typically provisioned as a permanent virtual circuit (PVC), but since. LAN traffic is often bursty, this solution uses up a great amount of band width even during relatively idle periods. Other solutions have been developed, one of which is to use standard ATM switching to set up a switched virtual circuit (SVC) whenever the ATU-R has an IP packet to forward over the ATM network by calling the destination ISP. The SVC is then allowed to expire after a predetermined period of inactivity. However, since it is desirable that atypical ATU-R be a small and relatively inexpensive device, programming the ATU-R with ATM switching capability would greatly increase the cost of the ATU-R.

Another solution has been proposed for solving the problem by calling for a separate Internet address resolution protocol (IARP) server connected to the ATU-R. Whenever the ATU-R issues anARP request, which it must do before routing an IP packet onto the ATM network after having not done so for a predetermined period of idle time, it sends the ARP request to the IARP server. The IARP server responds to the ARP request with an appropriate IP-to-MAC address translation, and also uses the IARP request as a trigger to establish the required SVC from the ATU-R to the correct destination on the ATM network. The SVC is torn down after a predetermined period of idleness which is long enough to ensure that the ATU-R will transmit another ARP request before transmitting more IP data. The IARP server establishes the SVC on behalf of the ATU-R, thereby obviating the need for this functionality to be built into the ATU-R. Although the ARP trigger mechanism avoids the bandwidth utilization problem typically associated with ATM. bandwidth provisioning using the PVC, it might still require changes to existing router implementations.

### SUMMARY OF THE INVENTION

The present invention provides a method for supporting a connectionless communications protocol over a connection-oriented network byusing dynamic assignments of IP addresses using a standard protocol, for example, a DHCP protocol, thereby conserving scarce IP address resources, efficiently utilizing the bandwidth, and obviating the need to change existing router implementations. When a computer powers up, it issues a DHCP request to the ISP or some other DHCP server, which responds by "leasing" an IP address to the computer for a predetermined period of time. After the "lease" expires, the computer issues a new DHCP request to receive a new "lease" of a new IP address. In accordance with the present invention, a DHCP request is used to trigger a DHCP server to establish the required SVC through proxy signaling.

In an embodiment, an external device, such as an access network controller, serves as a DHCP agent. The controller maintains a point-to-point connection with its user devices, such as ATM termination units - remote (ATU-R's). A user device sends its DHCP requests through this point-to-point connection. In an embodiment, the DHCP request is. encapsulated in a bridged RFC 1483 format. The controller administers a user profile for routing the user's DHCP request to the correct DHCP server. The connection to the DHCP server is IP based and can be a leased circuit in an embodiment. A leased circuit is capable of providing the security that is needed for the service. In an embodiment, the controller is capable of serving multiple ISPs and establishing connections to more than one DHCP server.

In an embodiment, the ISP and the controller belong to an "emulated" local area network (LANE). The controller is equipped with LANE software, including server, client, and broadcast and unknown server (BUS) software, for example. The user device, such as an ATU-R, has at least two VCs in an embodiment, wherein one of the VCs is used for DHCP processing while another one is used for user data traffic.

The ATM Forum has developed a set of protocols (LANE) for emulation of Ethernet LANs over an ATM network, and these are described in several publicly available documents including "LAN Emulation over ATM Version 1.0," ATM Forum, Mountain View, California (January 1995); LANEmulation Client Management Specification Version 1.0 (September 1995); LAN Emulation over ATM Version 1.0 Addendum (December 1995); LAN Emulation Servers Management Specification 1.0 (March 1996), all incorporated herein by reference. These documents call for an ATM network supporting LAN emulation to include a centralized broadcast and unknown server (BUS). When a LAN emulation client (LEC) receives a broadcast packet for forwarding onto the ATM network, the LEC does not "flood" the network Instead, it forwards the broadcast packet only to the BUS for handling. The BUS may, inturn, flood the network, depending on the packet.

In an embodiment, when the controller receives a DHCP request from the user device, it may optionally authenticate the user, and then forwards the request to the correct DHCP server. The routing decision can be based upon the user's MAC address or its DHCP VC. When a response returns from the DHCP server, the controller records the user's MAC address, the leased IP address and its expiration time found in the response. The controller then performs a LANE call setup to the ISP using the user's address information including the IP and MAC addresses and the Q.2931 protocol in an embodiment. Upon successful signaling, the controller sets the expiration time for the SVC to the expiration time for the leased IP address and issues a cross-connect to the ATM switch to connect the SVC to the user data path.

In an embodiment, the controller encapsulates the DHCP response in RFC 1483 format and forwards it to the user device. In accordance with the present invention, the user resends its DHCP request before the expiration of its leased IP address in order to maintain its data connection with the controller. Each new request resets the timer in the controller for the dynamic SVC. When the ISP sends an Ethernet ARP entry to resolve an IP-to-MAC address, the request is sent to the controller over the broadcast VC. The controller responds to it on behalf of the user device over the same VC. In an alternate embodiment, the ARP entry into the router can be set to infinite and it becomes invalid only when the VC is dismantled.

In an embodiment, the controller uses its LANE server capability to register the ISP. It may perform load balancing if there is more than one ISP access server. In an embodiment, any downstream call setup from the ISP access server to the user device is not allowed by the controller.

In an embodiment, the controller maintains a user profile which contains information including the user's MAC address, the user's IP address, the DHCP server IP address, the ISP MAC address, the ISP IP address, and the ISP ATM address. The user profile in the controller includes the leased IP address expiration time, the DHCP VC and the user data VC. Both the user's IP address and its expiration time are populated during the request.

Other aspects, features and advantages ofthe invention are set forth in more detail in the drawings, the claims and in the detailed description below.

### BRIEF DESCRIPTION OF THE DRAWINGS

The invention will be described with respect to particular embodiments thereof, and references will be made to the drawings, in which:
Fig. 1 is a block diagram of a generalized network architecture incorporating features of the invention;
Fig. 2 is a symbolic diagram of an embodiment of the architecture of Fig. 1;
Fig. 3 illustrates protocol data unit encapsulation and extraction performed by certain components in the system of Fig. 2; and
Fig. 4 is a flowchart illustrating proxy signaling using DHCP request as a trigger for LANE call setup in an embodiment according to the present invention.

### DETAILED DESCRIPTION

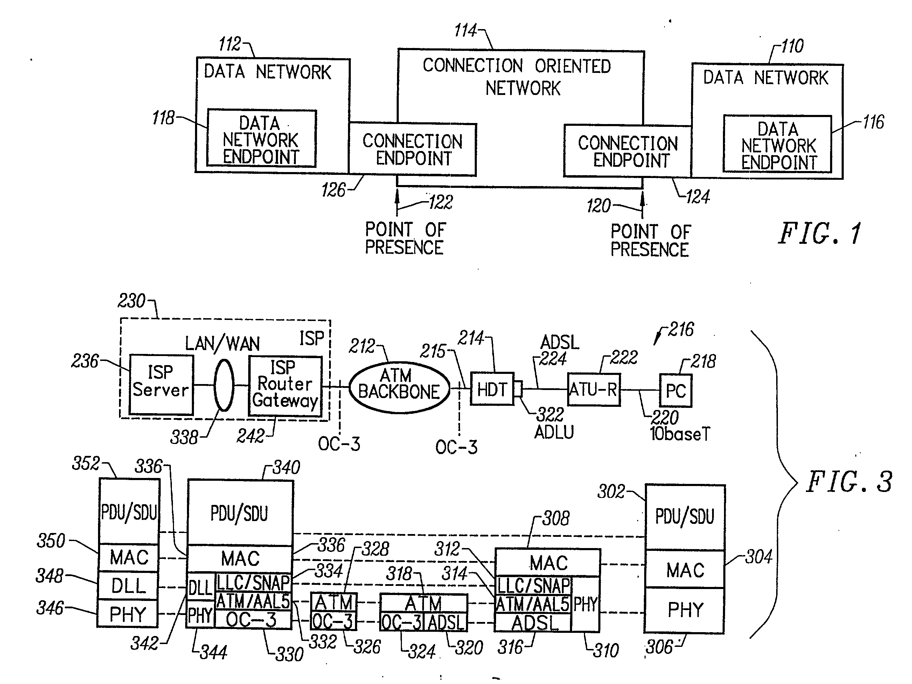

Fig. 1 is a block diagram of a generalized architecture which includes two data networks 110 and 112 communicating with each other via a connection-oriented network 114. The data network 110 uses a connectionless protocol at the lowest levels of the protocol stack, for example, IP over Ethernet. The data network 110 includes a client device having a data network endpoint 116, which either originates or terminates messages transmitted across a subject communications path to or from another data network endpoint 118 in the data network 112. The data network endpoint 116 is considered hereinto be a layer of software, for example, an application program on a host computer or routing decision-making software on a router. This software layer is above the network layer ofthe protocol stack ofthe data network 110. If the data network 110 includes a LAN, then the data network endpoint 116 can be part of the host computer connected to the LAN.

In an embodiment, the data network 112 has the same structure as that ofthe data network 110. In another embodiment, the data network 112 can be structured according to one of the other variations described above with respect to data network 110. For example, in one scenario, the data network 110 is a user's home office network whereas the data network 112 is located at the user's company site. In another typical scenario, the data network 110 is located at a residence or business location whereas the data network 112 belongs to an Internet Service Provider (ISP). Numerous other scenarios can be implemented using the structure of Fig. 1 in a variety of manners apparent to a person skilled in the art.

The connection-oriented network 114 in Fig. 1 can be, for example, a telephony network with an ATM backbone. It can have any number of network segments, as long as it provides a communication path between a point of presence 120, through which the data network 110 reaches the connection-oriented network 114, and another point of presence 122, through which the data network 112 reaches the connection-oriented network 114. A network is referred to herein as "connection-oriented" if it is connection-oriented at both opposite points of presence along the communication path through the network, even if one or more internal segments are actually connectionless.

The connection-oriented network 114 establishes "connections" between the various points of presence on the connection-oriented network 114, and each connection has different "connection endpoints" located at respective different points of presence. In the diagram of Fig. 1, connection endpoint 124 is located at point of presence 120, whereas connection endpoint 126 is located at point of presence 122. From the point of view ofthe connection-oriented network 114, its primary task is to carry information from one connection endpoint to another. The connection-oriented network 114 does not necessarily require any knowledge about the ultimate source or destination ofthe information that it carries, which in the structure of Fig. 1, for example, are the data network endpoints 116 and 118.

The connection endpoints 124 and 126 are illustrated symbolically in Fig. 1 as being partially within and partially without the connection-oriented network 114. In this embodiment, the connection endpoints each include one portion which understands the connection-oriented protocol used on network 114 but does not understand the connectionless protocol used on the data networks 110 and 112, and another portion which understands the connectionless protocol used on the data networks 110 and 112, but does not understand the protocol used on the connection-oriented network 114. The portion which understands the connection-oriented network protocol, which maybe implemented in hardware or software, is referred to herein as a connection-oriented network adapter. If the connection-oriented network 114 is an ATM network, then this portion is referred to as an ATM adapter. In a protocol stack, the "ATM adapter" refers to protocol layers below the media access control (MAC) layer.

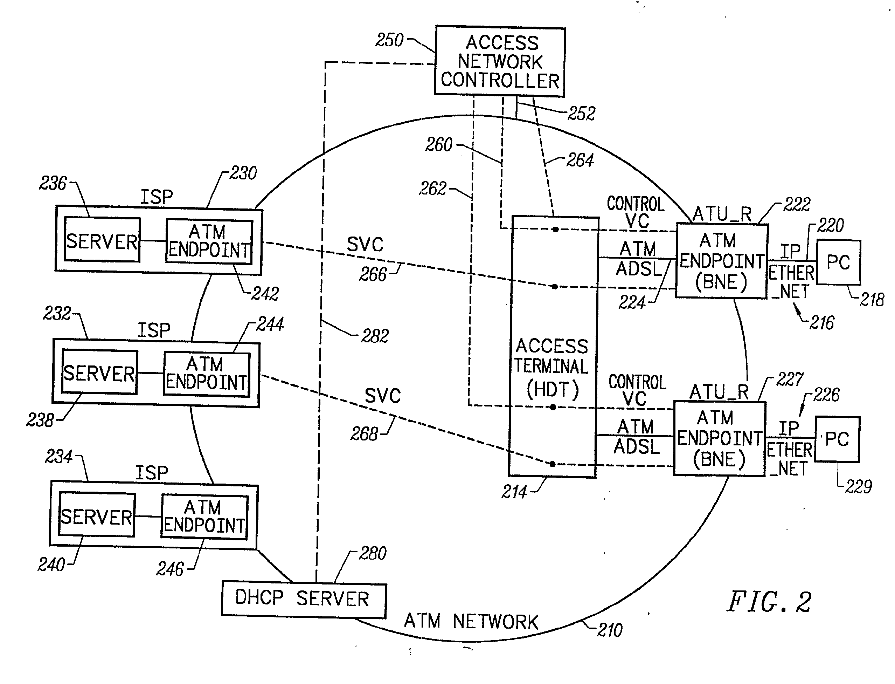

Fig. 2 is a symbolic diagram of one of many embodiments ofthe architecture of Fig. 1. In this embodiment, the connection-oriented network is an ATM network 210, which includes an ATM backbone, also sometimes called an ATM cloud, and a number of network access terminals located at various extremities of the ATM cloud. For the purpose of illustration, only one access terminal 214 is shown in Fig. 2. The access terminal 214, which is sometimes also referred to as a host digital terminal (HDT), provides multiple points ofaccess to the ATM cloud for various forms of drops. In some instances, a drop which is connected to the access terminal 214 does not use ATM, in which case the ATM endpoint is located within the access terminal 214. Fig. 2 illustrates two different drops, both of which continue to use the ATM protocol out to remote endpoints. Therefore, the overall connection-oriented network 210 as shown in Fig. 2 includes the communication lines between the access terminal 214 and the remote ATM endpoints.

The embodiment ofFig. 2 shows a data network 216 which includes a plurality of personal computers connected together on a LAN 220. For the purpose of illustration, only one personal computer, PC 218, is shown in Fig. 2. The LAN 220 carries data using an IP over Ethernet protocol. Also connected to the LAN 220 is a bridging network element (BNE) 222, which bridges data from the LAN 220 onto the ATM network 210. The BNE 222 is further connected via an ATM over asymmetrical digital subscriber line (ADSL) link 224 to the HDT 214. The ADSL is a physical layer protocol which is defined in a number of specifications, including American National Standards Institute, Subcommittee, "Telecommunications -Network and Customer Installation Interfaces - Asymmetric Digital Subscriber Line (ADSL) Metallic Interface," ANSI T1.413, Issue 2 (March 14, 1997), incorporated herein by reference.

The BNE 222 represents an endpoint on the ATM network 210, and therefore includes an ATM adapter (not shown). The BNE 222 is sometimes referred to as an ATM termination unit - remote (ATU-R). An additional data network 226 using the IP over Ethernet protocol with an additional ATM endpoint 227 is also shown in Fig. 2. In the embodiment of Fig. 2, it is assumed that the data network endpoints communicate most often with Internet service provider (ISP) servers. Three ISPs are illustrated in Fig. 2, namely, ISPs 230, 232 and 234. The ISPs 230, 232 and 234 have respective servers 236, 238 and 240 connected via respective LANs or WANs to respective ATM endpoints 242, 244 and 246 on the ATM network 210.

In the embodiment shown in Fig. 2, the data network endpoints are located in the PCs 218 and 229 and in the servers 236, 238 and 240. The data network endpoints are reachable across the ATM network 210 via respective points of presence within the ATM endpoints 222,227,242,244 and 246. Each ofthese devices contains an appropriate ATM adapter. The various data network endpoints communicate with each other via a connectionless communication protocol, the data carried by which is converted to the connection-oriented ATM protocol by the ATM adaptors at each respective point of presence on the ATM network 210.

The embodiment shown in Fig. 2 also includes an access network controller (ANC) 250, which performs a number of control functions with respect to the access terminal 214. The ANC 250 also performs a number of other functions, some of which are described in further detail below. The ANC 250 communicates with the access terminal 214 via a link 252 through the ATM network 210. In another embodiment, the ANC 250 is capable of communicating with the access terminal 214 directly, either instead of or in addition to communicating through the ATM network 210. In yet another embodiment, the ANC 250 can be part of the access terminal or HDT 214.

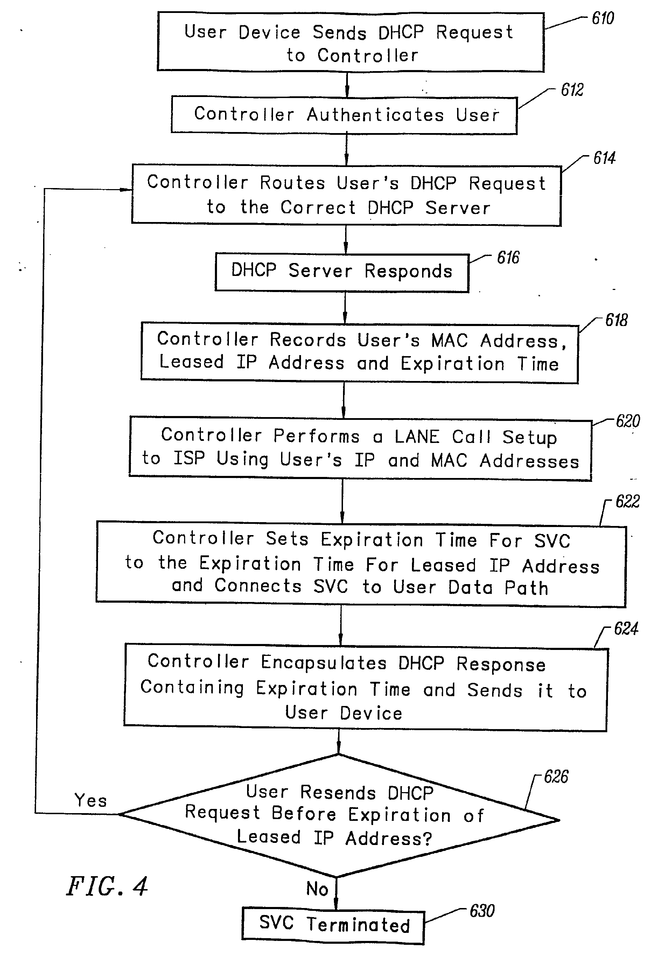

Fig. 3 illustrates an example of protocol data unit encapsulation and extraction performed by each component in the system of Fig. 2, specifically with respect to one ofthe data networks, for example, data network 216 and one ofthe ISPs, for example, ISP 230. Specifically, the protocol stacks supported in the various elements ofthe system are shown. In the PC 218, it can be seen that the protocol stack includes, in addition to other higher level layers not shown in Fig. 3, a network layer 302 which provides protocol data unit (PDU) or server data unit (SDU) datagrams, for example, IP datagrams, to a MAC layer 304, which packetizes the IP datagrams according to IEEE 802.3, for example. The packets provided by the MAC layer 304 are further passed down to the physical layer 306 for transmission over the wire 220 to the ATU-R222. The physical layer protocol used in Fig. 3 may be, for example, 10baseT, defined in ISL/IEC Standard No. 8802-3, Section 14, incorporated herein by reference.

The ATU-R222 contains two protocol stacks, one for communicating with the PC 218 and the other for communicating with the HDT 214. Since the ATU-R 222 is a bridging network element (BNE), the two protocol stacks are common at the MAC level 308 as shown in Fig. 3. Packets originating with the PC 218 are passed up the protocol stack in the ATU-R 222 to the MAC layer 308 and then passed down the protocol stack on the ATM network side in accordance with the standards set forth in RFC 1483. On the side ofthe data network 216, below the MAC level 308, is the physical layer 310 which communicates electrically with the physical layer 306 in the PC 218.

On the side of the ATM network, below the MAC layer 308, packets being transmitted onto the ATM network are first passed down to an LLC/SNAP layer 312. which, in accordance with RFC 1483, for example, prefixes each packet with an IEEE 802.2 logical link control (LLC) header. This step is referred to herein and in RFC 1483 as LLC encapsulation. The LLC/SNAP layer also inserts a sub-network attachment point (SNAP) header into each packet to specify the type of "bridged medium". In the embodiment shown in Fig. 3, the bridged medium is IEEE 802.3/Ethernet. The LLC/SNAP layer 312 then passes the packet down to an ATM/AAL5 layer 314, which, again in accordance with RFC 1483, encapsulates the packet or frame in the AAL5 CPCS/PDU payload field and segments into ATM cells. The payload format for bridged Ethernet/802.3 PDUs is as follows:

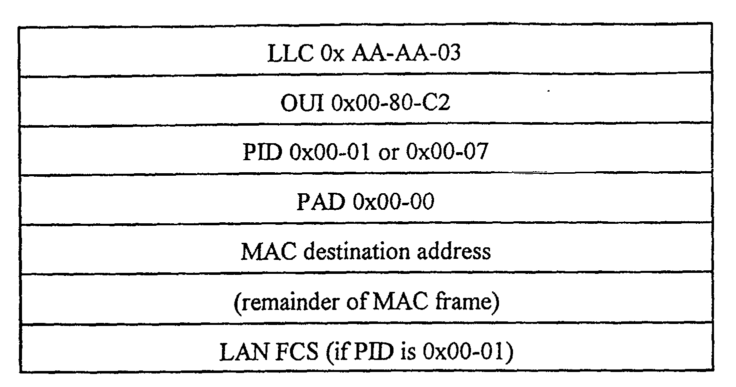

The LLC/SNAP layer 312 and the ATM/AAL5 layer 314 together make up the ATM adaptation layers in the ATU-R 222. The ATM/AAL5 layer 314 passes the ATM cells down to another physical layer protocol, which, in the case ofthe ATU-R 222, is an ADSL layer 316.

The HDT 214 also includes two protocol stacks, one on the side of the ATU-R 222 and the other on the side of the ATM backbone 212. The two protocol stacks are common at the ATM layer 318. Below the ATM layer on the ATU-R 222 side is an ADSL adapter layer 320, which is physically within a separate ADSL line unit (ADLU) card 322 in the HDT 214. Below the ATM layer 318 on the ATM backbone 212 side of the HDT 214 is an optical carrier, for example, OC-3 protocol layer 324 which transmits and receives ATM cells according to the synchronous optical network (SONET) OC-3 and synchronous transport signal-3c (STS-3c) protocols, for example.

The ATM backbone 212 includes only a single protocol stack since it transmits and receives on both sides using ATM over OC-3/STS-3c. Therefore, an OC-3/STS-3c protocol layer 326 receives data from the HDT 214 via an optical fiber 215, and passes it up to the ATM layer 328, which switches it as necessary and passes it back down to the OC-3/STS-3c layer 326 for transmission to the ISP 230.

The layers 328 and 326 are representative of a potentially large number of switching nodes within the overall ATM backbone 212, each of which has its own two layer stack 328 and 326. It will be appreciated however, in the degenerate case, that the ATM backbone 212 might not perform any switching at all. For example, the ATM backbone 212 might include only physical layer repeaters, in which case the only layer that would be included in the protocol stack would be 326 and not 328. Alternatively, the ATM backbone 212 could represent merely a straight-through fiber connection, in which case no protocol stack would be present at all.

In the ISP router/gateway 242, which includes the ATM endpoint shown in Fig. 2, two protocol stacks are included. Data arriving from the ATM backbone 212 enters an OC-3/STS-3c physical layer 330, which passes it up to an ATM/AAL5 layer 332. The ATM/AAL5 layer 332 passes it up further to an LLC/SNAP layer 334, which in turn passes itup further to aMAC layer 336. The layers 332 and 334 represent an ATM adapter, and perform functions complementary to the layers 314 and 312, respectively, in the ATU-R 222.

Further layers above the LLC/SNAP layer 334 in the ISP router/gateway 242 will vary greatly depending on the structure and the network organization ofthe ISP 230. One example is shown in Fig. 3, in which the MAC layer 336 is common both to the protocol stack on the ATM backbone 212 side of the ISP router/gateway 242, and on the LAN/WAN side 338. A network layer 340 is also common to both sides of the router/gateway 242. Therefore, the data passed up the protocol stack from the LLC/SNAP layer 334 reaches the MAC layer 336, which extracts and reassembles datagrams for the network layer 340. The network layer 340 performs appropriate routing functions and passes them back down the protocol stack through the MAC layer 336 to a generalized data link layer (DLL) 342, which in turn passes it further down to another generalized physical (PHY) layer 344. The data then passes through the LAN/WAN 338 and up the protocol stack in the ISP server 236.

This protocol stack can vary greatly depending on the implementation, but for the purpose of illustration, it is shown in Fig. 3 as including a physical layer 346, which is under a data link layer (DLL) 348, which is under a MAC layer 350, which is under another network layer 352. It is apparent to a person skilled in the art that data transmitted from the ISP server 236 to the PC 218 traverses the various protocol stacks of Fig. 3 in the opposite direction and in a complementary manner to the one described above.

The protocol stacks of Fig. 3 illustrate the transformations which take place as data is transferred from one data network endpoint to another across the ATM network 210 as shown in Fig. 2. It can be seen in the illustration of Fig. 3 that the information adheres to a connectionless protocol from the network layer 302 in the PC host 218 to the MAC layer 308, and also from the MAC layer 336 out to the network layer 352 ofthe ISP server 236. In between, that is, from the LLC/SNAP layer 312 to the LLC/SNAP layer 334, the data adheres to the connection-oriented ATM protocol. The two "points of presence" illustrated in Fig. 3 are considered herein to be at the boundary between the MAC layer 308 and the LLC/SNAP layer 312 and at the boundary between the MAC layer 336 and the LLC/SNAP layer 334.

None ofthis communication can take place, however, until connections are set up across the connection-oriented ATM network 210. As previously mentioned, the establishment of connections across such a network for carrying data generated according to a connectionless protocol has been problematic in the past. In the embodiments described herein, a trigger mechanism is used to cause the connection-oriented network to establish the necessary connection. Particularly with respect to data networks utilizing communication protocols in which a network layer overlays a MAC layer and in which the two layers have different addressing schemes, it is known that hosts and other nodes on the network issue periodic address resolution requests (ARPs) to determine what the MAC level address is which corresponds to a particular desired network layer address. In addition, each node waits until an address resolution reply message is received, before it begins the transmission of a stream of data packets to that address.

Most kinds of nodes on a data network cache network-layer-to-MAC-layer address translations in order to avoid having to issue address resolution requests prior to each packet that they transmit. Because the address mappings are only semi-permanent, most network agents deliberately age such translations out oftheir cache if no reference is made to the entry for some predefined age-out period. If there is no activity through the virtual connection for enough time to cause the ATM network to time-out the virtual connection, then as long as the ATM time-out period is at least as long as the age-out period used by a particular data network node for aging its address translation cache entries after anytime-out ofthe virtual connection across the ATM network, the data network node will transmit a new address resolution request before it attempts to transmit any further data packets directed to the same destination. Therefore, the use of address resolution packets as a trigger to establish virtual connections across the ATM network is effective even in the presence of network enforced time-outs of virtual connections, as long as such time-out periods are at least as long as the data network node address translation cache age-out periods.

Fig. 4 is a flow chart illustrating the process steps for proxy signaling using DHCP request as a trigger for LANE call setup in an embodiment according to the present invention. An external device, such as the access network controller (ANC) 250 as shown in Fig. 2, serves as a DHCP agent. The controller 250 maintains a point-to-point connection with one or more user devices, such as ATU-R's 222 and 227 as shown in Fig. 2.

Referring to the flow chart of Fig. 4, the user device sends its DHCP requests over this connection in step 610. In an embodiment, this DHCP request is encapsulated in a bridged RFC 1483 format. The access network controller administers a user profile with which to route the user's DHCP request to the correct DHCP server, for example, the DHCP server 280 as shown in Fig. 2. In many cases, the correct DHCP server will be part of the user's ISP, and reachable via the appropriate ATM endpoint 242, 244 or 246. In an embodiment, the data path between the controller 250 and the DHCP server 280 is IP based and can be a leased circuit 282 on the ATM network 210. A leased circuit provides security for the DHCP service. In an embodiment, the controller may serve multiple ISPs, and thus may be connected to more than one DHCP server.

In an embodiment, the ISPs and the access network controller belong to aLANE. The controller is equipped with LANE software, including server, client and broadcast and unknown server (BUS) software, for example. In this embodiment, the user device has at least two VCs, one of which is for DHCP processing while the other is used for data traffic.

When the controller receives a DHCP request from the user device, it may optionally authenticate the user in step 612 of Fig. 4. The controller then routes the user's DHCP request to the correct DHCP server in step 614. The routing decision can be based on either the user's MAC address or its DHCP VC, for example. The DHCP server responds to this DHCP request in step 616 and returns a response which includes the user's MAC address, the leased IP address and its expiration time to the controller. The controller records the user's MAC address, the leased IP address and its expiration time found in the response in step 618.

The controller then performs a LANE call setup to the ISP using the user's address information, including its IP and MAC addresses and Q.2931 protocol in step 620. In an embodiment, this is accomplished by the controller performing proxy signaling on behalf of the HDT 214. The call set-up procedures are described in detail in the above-incorporated UNI 4.0, and need not be described herein in detail. Briefly, however, the UNI signaling messages used for point-to-point call/connection control are the following:

| Call Setup | Call Release |
|---|---|
| SETUP | RELEASE |
| CALL PROCEEDING | RELEASE COMPLETE |
| CONNECT | |
| CONNECT ACKNOWLEDGE | |

An ATM endpoint initiates a call request by sending a SETUP message to the ATM network. The ATM network processes the call request to determine if the call can be progressed. If so, the network indicates the value of the newly allocated VPCI/VCI(i.e. the identifier of the newly allocated connection) in its first response to the SETUP message, which is either a CALL PROCEEDING or CONNECT message. If a call cannot be accepted, by the network or by the destination ATM endpoint, then a RELEASE COMPLETE is sent to the originating ATM endpoint. At the destination ATM endpoint, the ATM network offers the call using the SETUP message. If the destination endpoint is able to accept the call, it responds with a CONNECT message (which may be preceded by a CALL PROCEEDING); otherwise, it responds with a RELEASE COMPLETE message. Assuming the connection is in fact successful, the ATM endpoint 222 then has a Switched Virtual Circuit (SVC) established through the HDT 214 to the ATM endpoint 242 of the desired ISP 230. The SVC is represented in Fig. 2 by the broken line 266. The ability of an entity such as ATM endpoint 222 to initiate call set-up procedures across the ATM network 210, is sometimes referred to as Q.2931 signaling capability because it is described in the above-incorporated Q.2931 specification. In an embodiment, the ANC 250 performs its own Q.2931 proxy signaling on behalf of the HDT 214. Proxy signaling is described in detail in Annex 2 of the above-incorporated UNI 4.0 document.

Upon successful signaling by the ISP, the controller sets the expiration time for the SVC to the expiration time for the leased IP address found in the response from the DHCP server in step 622. The controller then issues a cross-connect to the ATM switch in the access terminal to connect the new SVC to the user data path, thereby establishing a dynamic SVC between the user device, such as an ATU-R, and the ISP. The controller encapsulates the DHCP response in RFC 1483 format and forwards it to the user device.

After the user device receives the encapsulated DHCP response, the user is required to resend its DHCP request before the expiration ofthe leased IP address in order to maintain its data connection with the ISP. Each new request resets the timer in the controller for the dynamic SVC. In the embodiment illustrated in Fig. 4, the user is required to resend its DHCP request before the expiration time of its existing leased IP address to the controller in step 626 if it desires to maintain its data connection through the dynamic SVC. The controller in response routes the user's DHCP request to the correct DHCP server in step 614 and repeats steps 616-626 thereafter. Each new request resets the timer in the controllerforthe dynamic SVC. Since the leased IP address is temporary, a different IP address may be assigned to the user device for each leased IP address time period. On the other hand, if the user device fails to resend its DHCP request before the expiration time ofthe existing leased IP address, the S VC is terminated at the expiration time in step 630, thereby tearing down the data connection between the ISP and the user device.

Note that the DHCP response is not returned to the user device until the SVC has been set up and a complete VC exists between the ATU-R 222 and the ISP to which the user device wants to communicate. In this manner, the user device will be prevented from transmitting streams of data packets destined for the ISP 230 until after the ATU-R222 has a complete VC through which to forward them.

In order to maintain the data connection between the user device and the ISP, the user is required to resend its DHCP request to the controller some time before the expiration ofthe existing leased IP address, to allow sufficient time for the controller to process the user's DHCP request in order to issue a new leased IP address and to reset the timer for the dynamic SVC as illustrated in steps 614-624 in the flow chart of Fig. 6. The total time period for a leased IP address is usually predetermined, for example, ten minutes. In order to maintain the data connection and to allow sufficient time for the user to obtain a new leased IP address, the user needs to send a new DHCP request at a predetermined time prior to the expiration ofthe existing leased IP address. For example, a user device may be programmed to send a DHCP request nine minutes after it obtained the existing leased IP address if the total time period for the leased IP address is ten minutes, thereby allowing up to one minute oftime for it to obtain a new leased IP address from the controller based upon the new DHCP request before the expiration ofthe existing SVC connection and the existing leased IP address.

In the embodiment described herein, the DHCP server relay, the LAN emulation server and the signaling portion of a LAN emulation client all run on ANC 250. In another embodiment, one or two, or all three, of these functions can run on the HDT 214. Other variations are also possible and will be apparent to the reader, such as running one or more ofthe functions at a different location across either the ATM network or an IP network or both.

In an embodiment, when the ISP sends an Ethernet ARP entry to resolve an IP to MAC address, the request is sent to the controller over the broadcast VC. The controller responds to it on behalf of the user device over the same VC. Alternatively, the ARP entry into the router can be set for infinite duration and becomes invalid only when the VC is dismantled.

In an embodiment, the controller uses its LANE server capability to register the ISP. The LANE server may serve a plurality ofISPs. The controller may even perform load balancing if there is more than one ISP server. In an embodiment, any downstream call setup from the ISP server to the user device is not allowed by the controller.

In an embodiment, the access network controller administers a user profile which contains information including the user's IP address and its expiration time as well as the user's MAC address, the DHCP server IP address, the ISP MAC address, the ISP IP address, the ISP ATM address, the DHCP VC and the user data VC. The existing leased user IP address and its expiration time for each of the user devices is maintained by the access network controller until a new DHCP request is received from the user device before the expiration of its leased IP address, in which case the access network controller requests the DHCP server to issue a new leased IP address for that user. Proxy signaling using DHCP request for maintaining data connections using leased IP addresses and dynamic SVCs allows efficient utilization ofthe available ATM bandwidth while maintaining data connections between ISPs and user devices. If any one of the user devices fails to resend its DHCP request before the expiration of its existing leased IP address, its data connection with the ISP through the existing dynamic SVC will be dropped at the expiration of the existing leased IP address. A new SVC will be set up in the manner described herein, if and when the user device issues a new DHCP request.

The embodiments described herein were chosen in order to best explain the principles ofthe invention and its practical applications, thereby enabling others skilled in the art to understand the invention for various embodiments and with various modifications as are suited to the particularuse contemplated. It is intended that the scope ofthe invention be defined by the following claims and their equivalents.

## Claims

1. A method for managing connections on a connection-oriented network having a plurality of points-of-presence including first and second points-of-presence, for use with a plurality of devices communicating according to a connectionless communication protocol, said connectionless communication protocol comprising a first sub-protocol having a first addressing scheme, comprising the steps of:
receiving a request message transmitted by a first one of said devices via said first point-of-presence, for obtaining an address according to said first addressing scheme for said first device; and
controlling said connection-oriented network, in response to said request message, to establish a connection between said first point-of-presence and said second point-of-presence.

2. A method according to claim 1, further comprising the step of relaying to said first device a reply to said request message.

3. A method according to claim 1, wherein ad address obtained in response to said request message is valid for only a particulartime period, further comprising the step of controlling said connection-oriented network to tear down said connection in response to expiry of said particular time period unless another request message transmitted by said first device for obtaining an address according to said first addressing scheme is received before the expiry of said particular time period.

4. A method according to claim 3, further comprising the step, between said step of controlling said connection-oriented network to establish a connection and said step of controlling said connection-oriented network to tear down said connection, of said connection-oriented network carrying messages from said first device via said connection.

5. A method for managing connections on an ATM network having a plurality of points-of-presence including first and second points-of-presence, for use with a plurality of devices communicating according to an IP network layer protocol, comprising the steps of:
receiving a DHCP request message transmitted by a first one of said devices via said first point-of-presence; and
controlling said ATM network, in response to said DHCP request message, to establish a connection between said first point-of-presence and said second point-of-presence.

6. A method according to claim 5, further comprising the step oftransmitting to said first device a DHCP reply message prepared in response to said DHCP request message.

7. A method according to claim 6, wherein said DHCP reply message indicates a lease period, further comprising the step of controlling said ATM network to tear down said connection in response to expiry of said lease period without renewal.

8. A method according to claim 7, further comprising the steps, after said step of controlling said ATM network to tear down said connection, of:
receiving an additional DHCP request message transmitted by said first device via said first point-of-presence; and
controlling said ATM network, in response to said additional DHCP request message, to establish a connection between said first point-of-presence and said second point-of-presence.

9. A method for supporting a connectionless communication protocol over a connection-oriented network having a plurality of points-of-presence including at least first and second points-of-presence, the method comprising the steps of:
(a) detecting a first request according to dynamic host configuration protocol (DHCP) by a first device via the first point-of-presence on the connection-oriented network;
(b) controlling the connection-oriented network, in response to the first request according to DHCP, to maintain a data path between the first point-of-presence and the second point-of-presence for a predetermined duration ending at a first given expiration time, a second device being reachable via the second point-of-presence on the connection-oriented network; and
(c) subsequently controlling the connection-oriented network to tear down the data path at the first given expiration time,
wherein the first device is capable of transmitting a second request according to DHCP prior to the first given expiration time, to maintain the data path between the first point-of-presence and the second point-of-presence for a predetermined duration which ends at a second given expiration time no earlier than the first given expiration time.

10. The method of claim 9, wherein the step of controlling the connection-oriented network comprises the step of routing the first request according to DHCP by the first device to a DHCP server which is reachable via a third point-of-presence on the connection-oriented network.

11. The method of claim 10, wherein the DHCP server is reachable over a leased circuit.

12. The method of claim 10, wherein the step of controlling the connection-oriented network further comprises the step of obtaining a DHCP response including a leased internetworking protocol (IP) address and a media access controller (MAC) address for the first device from the DHCP server.

13. The method of claim 9, wherein the step of controlling the connection-oriented network further comprises the step of transmitting the first given expiration time to the first device.

14. The method of claim 9, wherein the step of controlling the connection-oriented network further comprises the step of performing a local area network-emulation (LANE) call setup to the second device in response to the first request according to DHCP by the first device.

15. The method of claim 9, wherein the first device comprises a user device.

16. The method of claim 15, further comprising the step of authenticating the user device.

17. The method of claim 9, wherein the second device comprises an Internet service provider (ISP).

18. The method of claim 9, wherein the connection-oriented network comprises an asynchronous transfer mode (ATM) network.

19. A method for maintaining a data communication path over a connection-oriented network having a plurality of points-of-presence including at least first and second points-of-presence, the method comprising the steps of:
(a) transmitting a first request according to dynamic host configuration protocol (DHCP) by a first device via the first point-of-presence on the connection-oriented network;
(b) awaiting a first response according to DHCP, the first response including a first leased Internetworking protocol (IP) address and a first given expiration time for the first leased IP address, wherein the first response signals establishment of a data communication path between the first and second points-of-presence;
(c) communicating between the first and second points-of-presence via the data communication path for a predetermined duration ending at the first given expiration time, a second device being reachable via the second point-of-presence on the connection-oriented network; and
(d) transmitting a second request according to DHCP by the first device prior to the first given expiration time, to maintain the data path between the first point-of-presence and the second point-of-presence for the predetermined duration which ends at a second given expiration time no earlier than the first given expiration time.

20. The method of claim 19, wherein the first device comprises a user device.

21. The method of claim 19, wherein the second device comprises an Internet service provider (ISP).

22. The method of claim 19, wherein the connection-oriented network comprises an asynchronous transfer mode (ATM) network.

23. A method for supporting a connectionless communication protocol over a connection-oriented network having a plurality of points-of-presence including at least first and second points-of-presence, the method comprising the steps of:
(a) receiving a first request according to dynamic host configuration protocol (DHCP) by a first device via the first point-of-presence on the connection-oriented network;
(b) routing the first request to a DHCP server;
(c) receiving a first response according to DHCP protocol from the DHCP server, the first response including a first leased internetworking protocol (IP) address and a first expiration time for the first leased IP address;
(d) performing a local area network-emulation (LANE) call setup to a second device which is reachable via the second point-of-presence on the connection-oriented network;
(e) establishing a switched virtual circuit (SVC) between the first and second points-of-presence; and
(f) transmitting the first expiration time for the first leased IP address to the first device,
wherein the first device is capable of transmitting a second request according to DHCP prior to the first given expiration time, to maintain the SVC between the first point-of-presence and the second point-of-presence for a predetermined duration which ends at a second given expiration time no earlier than the first given expiration time.

24. The method of claim 23, wherein the DHCP server is reachable over a leased circuit on the connection-oriented network.

25. The method of claim 23, wherein the first device comprises a user device.

26. The method of claim 25, further comprising the step of authenticating the user device.

27. The method of claim 23, wherein the second device comprises an Internet service provider (ISP).

28. The method of claim 23, wherein the connection-oriented network comprises an asynchronous transfer mode (ATM) network.
